(19) Europäisches Patentamt / European Patent Office / Office européen des brevets

(11) **EP 3 869 616 B1**

(12) **EUROPEAN PATENT SPECIFICATION**

(45) Date of publication and mention
of the grant of the patent:
**18.10.2023 Bulletin 2023/42**

(21) Application number: **20158653.4**

(22) Date of filing: **21.02.2020**

(51) International Patent Classification (IPC):
*H01Q 1/42* *(2006.01)*   *G01S 7/03* *(2006.01)*
*G01S 13/42* *(2006.01)*   *G01S 13/02* *(2006.01)*
*G01S 7/40* *(2006.01)*

(52) Cooperative Patent Classification (CPC):
**G01S 13/42; G01S 7/03; G01S 7/4026;**
G01S 7/4039; G01S 2013/0263

(54) **MEASUREMENT SYSTEM FOR MEASURING AN ANGULAR ERROR INTRODUCED BY A RADOME AND CORRESPONDING METHOD**

MESSSYSTEM ZUR MESSUNG EINES DURCH EIN RADOM EINGEFÜHRTEN WINKELFEHLERS UND ENTSPRECHENDES VERFAHREN

SYSTÈME DE MESURE D'UNE ERREUR ANGULAIRE INTRODUITE PAR UN RADÔME ET PROCÉDÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.08.2021 Bulletin 2021/34**

(73) Proprietor: **Rohde & Schwarz GmbH & Co. KG**
**81671 München (DE)**

(72) Inventors:
• **Gumbmann, Dr.-Ing., Frank**
**90480 Nürnberg (DE)**
• **Köppel, Tobias**
**81541 München (DE)**

(74) Representative: **Rupp, Christian et al**
**Mitscherlich PartmbB**
**Patent- und Rechtsanwälte**
**Karlstraße 7**
**80333 München (DE)**

(56) References cited:
**EP-A1- 3 258 288      US-A- 4 303 211**
**US-A1- 2018 306 903**

• **GRORUD E ET AL: "Design and measurement of an active array antenna for an airborne X-Band SAR/MTI radar", ANTENNAS AND PROPAGATION, 2006. EUCAP 2006. FIRST EUROPEAN CONFERENCE ON, IEEE, PISCATAWAY, NJ, USA, 6 November 2006 (2006-11-06), pages 1-4, XP031393464, ISBN: 978-92-9092-937-6**

**Description**

The invention relates to a measurement system for measuring an angular error introduced by a cover for a radar system and a measurement method for measuring an angular error introduced by a cover for a radar system.

Generally, in times of an increasing number of applications employing radar systems comprising radar covers such as autonomous vehicles comprising radomes, there is a growing need of a measurement system for measuring an angular error introduced by a cover for a radar system and a measurement method for measuring an angular error introduced by a cover for a radar system in order to ensure a correct functioning of such applications especially on the basis of a highly accurate and efficient angle error estimation.

For instance, WO 00/28622 shows an antenna or an antenna system, respectively, with a radome. Said antenna system includes a flat dielectric plate radome having a thickness of one-half wavelength at a frequency of operation. The plate has an electrically conductive grid disposed on an inside surface thereof to permit perpendicularly polarized energy rays to pass therethrough. A parabolic twist reflector is spaced from the radome, and includes a dielectric substrate having a thickness equivalent to one-quarter wavelength at a frequency of operation and having formed on an interior surface thereof an array of conductive strips oriented by 45 degrees relative to the incident ray polarization. A radio frequency housing including a plurality of radio frequency feed elements is located at the focal region and the elements are spaced by a single beamwidth. Disadvantageously, such an antenna or antenna system, respectively, typically causes an angular error because of the radome, especially because of inhomogeneities thereof.

US 2018/306903 A1 relates to a method and apparatus for radar accuracy measurements.

EP 3 258 288 A1 relates to a method for testing the transmission and reflection properties of an automotive radome body as well as an apparatus for testing the transmission and reflection properties of an automotive radome body.

Accordingly, there is an object to provide a measurement system for measuring an angular error introduced by a cover for a radar system and a measurement method for measuring an angular error introduced by a cover for a radar system in order to ensure a correct functioning of such applications comprising radomes especially on the basis of a highly accurate and efficient angular error estimation. The invention is set out in the appended set of claims. The object is solved by the features of the first independent claim for a measurement system for measuring an angular error introduced by a cover for a radar system and the features of the second independent claim for a measurement method for measuring an angular error introduced by a cover for a radar system. The dependent claims contain further developments.

Exemplary embodiments of the invention are now further explained with respect to the drawings by way of example only, and not for limitation. In the drawings:

Fig. 1A    shows an exemplary embodiment of a radar with phased array;
Fig. 1B    shows an exemplary angle estimation in a correct manner with respect to the radar with phased array;
Fig. 2A    shows an exemplary embodiment of a radar with phased array and radome;
Fig. 2B    shows an exemplary angle estimation in an incorrect manner with respect to the radar with phased array and radome;
Fig. 3    shows an exemplary embodiment of a ray optical approach for correctly estimating an angular error ;
Fig. 4    shows an exemplary embodiment of a wave theoretical approach for correctly estimating an angular error;
Fig. 5    shows a first exemplary embodiment of a measurement system;
Fig. 6    shows a second exemplary embodiment of a measurement system;
Fig. 7    shows a third exemplary embodiment of a measurement system;
Fig. 8    shows a fourth exemplary embodiment of an inventive measurement system;
Fig. 9    shows a fifth exemplary embodiment of a measurement system;
Fig. 10    shows an exemplary embodiment being based on the fourth and the fifth embodiment in accordance with the first aspect of the invention;
Fig. 11    shows a flow chart of an embodiment of a measurement system; and
Fig. 12    shows a flow chart of a further embodiment of a measurement system.

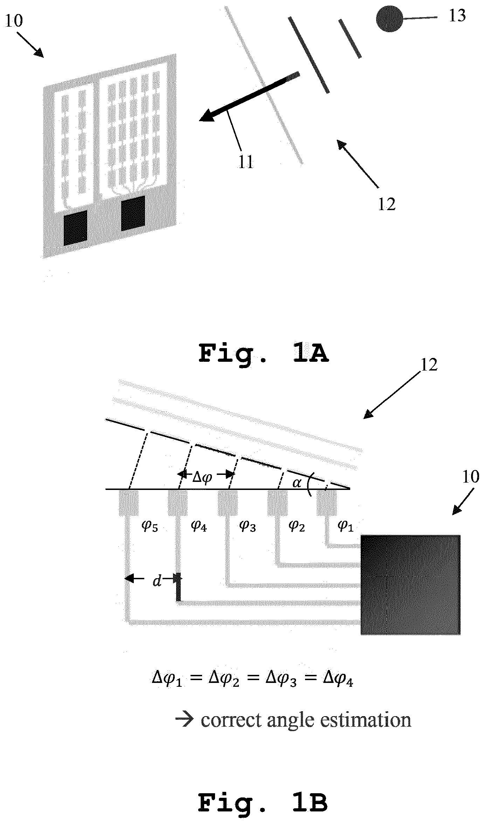

Firstly, Fig. 1A shows an exemplary embodiment of a radar with phased array 10. Additionally, one can see a target 13, a plane wave front 12 of the respective reflected signal, and the corresponding direction of propagation 11 of said plane wave front.

In this context, it is noted that the respective azimuth angles and/or the respective elevation angles are estimated on the basis of phase differences with respect to the corresponding receive antennas.

Furthermore, Fig. 1B illustrates an exemplary angle estimation in a correct manner with respect to the radar with phased array 10. As it can be seen, each of the respective phase differences have the same value:

$$\Delta\varphi_1 = \Delta\varphi_2 = \Delta\varphi_3 = \Delta\varphi_4 \quad .$$

Said phase differences are calculated by the following formula:

$$\alpha = \sin^{-1}\left(\frac{\lambda \cdot \Delta\varphi}{2\pi d}\right) \quad ,$$

wherein **d** denotes the respective distance of the corresponding antennas of the array,
wherein $\Delta\varphi = \varphi_{i+1} - \varphi_i$ denotes the respective phase difference,
wherein $\alpha$ denotes the respective incidence angle, and
wherein $\lambda$ denotes the respective wavelength.

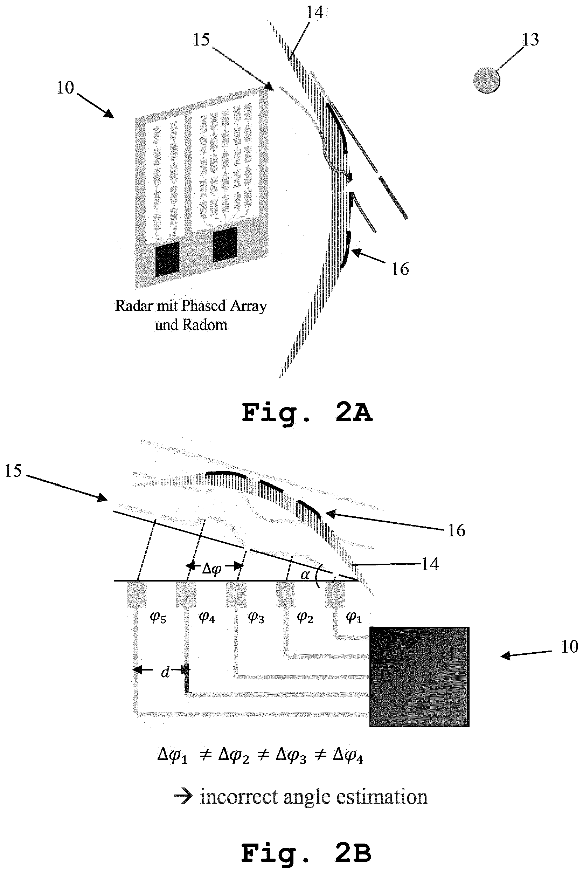

With respect to Fig. 2A, an exemplary embodiment of a radar with phased array 10 in combination of a radome 14 or any cover for the radar, respectively, is illustrated. As it can further be seen, the radome 14 comprises inhomogeneities 16, which especially leads to a disturbed wave front 15.
In this context, it is noted that the respective homogeneity or the lack of homogeneity, respectively, and/or the respective attenuation of the radome 14 is critical for the radar performance, especially for the accuracy of the above-mentioned angle estimation. It is further noted that said angle estimation is especially important for a respective location determination.
Moreover, Fig. 2B shows an exemplary angle estimation in an incorrect manner with respect to the radar with phased array and radome. As it can further be seen, the respective phase differences do not have the same value:

$$\Delta\varphi_1 \neq \Delta\varphi_2 \neq \Delta\varphi_3 \neq \Delta\varphi_4 \quad .$$

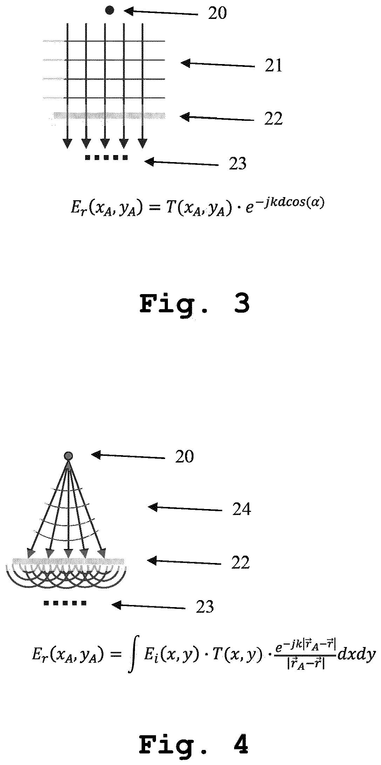

With respect to Fig. 3, an exemplary embodiment of a ray optical approach for correctly estimating an angular error in accordance with the invention is illustrated.
Fig. 3 shows a radar target 20, a plane wave front 21 with incidence angle $\alpha$, a device under test 22 with transmission factor $T(x,y)$ (especially complex-valued), and a receive array 23 comprising receive data denoted by $E_r(x_A, y_A)$.
In this context, the following formula applies:

$$E_r(x_A, y_A) = T(x_A, y_A) \cdot e^{-jkdcos(\alpha)} \quad ,$$

wherein $d$ denotes the respective distance of the corresponding antennas of the array.
Furthermore, Fig. 4 illustrates an exemplary embodiment of a wave theoretical approach for correctly estimating an angular error in accordance with the invention.
In contrast to Fig. 3, Fig. 4 shows a spherical wave or a plane wave front with incident field denoted by $E_i(x,y)$. In this context, the following formula applies:

$$E_r(x_A, y_A) = \int E_i(x, y) \cdot T(x, y) \cdot \frac{e^{-jk|\vec{r}_A - \vec{r}|}}{|\vec{r}_A - \vec{r}|} dxdy \quad .$$

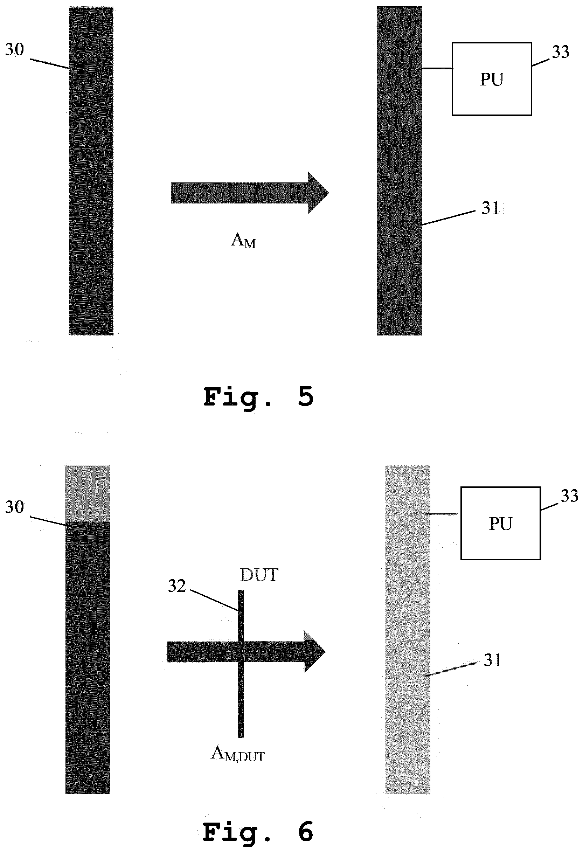

As it can be seen, Fig. 3 and Fig. 4 are especially related to simulation of the respective radar receive signals. With respect to a corresponding beam forming of the simulated receive data, it is noted that in this context a Fast Fourier Transform, a Chirp-Z Transform, a backpropagation, or any combination thereof may be used. Furthermore, a respective angle error estimation may be performed on the basis of a comparison the corresponding beam forming results with/without the respective transmission factor.
Now, with respect to Fig. 5 and Fig. 6, block diagrams of a first and a second exemplary embodiment of a measurement system for measuring an angular error introduced by a cover for a radar system (device under test, DUT) are shown.
Each of said embodiments comprises at least one transmit antenna or at least one transmitter 30, respectively, and a receive array, especially a two-dimensional receive array 31, whereas the second embodiment comprises a device under test 32.

In this context, according to Fig. 5, especially a reference measurement is performed, wherein the respective measuring data comprises a transmission distribution, preferably a two-dimensional transmission distribution, denoted by $A_M$.

In accordance with Fig. 6, especially a measurement with DUT is performed, wherein the respective measuring data comprises a transmission distribution, preferably a two-dimensional transmission distribution, denoted by $A_{M,DUT}$. In this context, especially a single-transmission through the DUT is measured, wherein the transmission is analyzed with respect to magnitude and phase.

Furthermore, it is noted that on the basis of the above-mentioned values $A_M$ and $A_{M,DUT}$, the respective transmission mask $T$ (especially complex-valued) can be determined by

$$T = A_{M,DUT}/A_M \quad .$$

With respect to said transmission mask, it is noted that the transmission mask especially comprises complex transmission coefficients of the respective received signal over various positions in the receive array.

Moreover, with respect to each of Fig. 5 and Fig. 6, as it can be seen, the system additionally comprises a processing unit 33 connected to the receive array 31. Said processing unit may preferably be configured to determine the respective transmission mask.

It might be particularly advantageous if the receive array 31 is phase coherent with the at least one transmit antenna 30. In addition to this or as an alternative, all elements of the receive array 31 may especially be synchronized.

With respect to the corresponding complex transmission coefficients, it is noted that the corresponding complex transmission coefficients may preferably comprise or represent the respective disturbed aperture function.

In this context, it might be particularly advantageous if a corresponding Fourier transform of the disturbed aperture function comprises or represents the respective far-field beam pattern of the receive array.

Again, with respect to the first and second embodiment according to Fig. 5 and Fig. 6, it is noted that said embodiments can alternatively be seen as two different measurement steps performed by the same system.

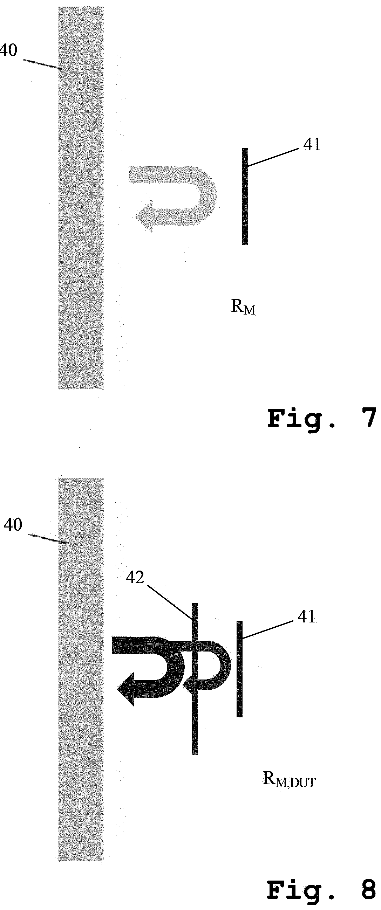

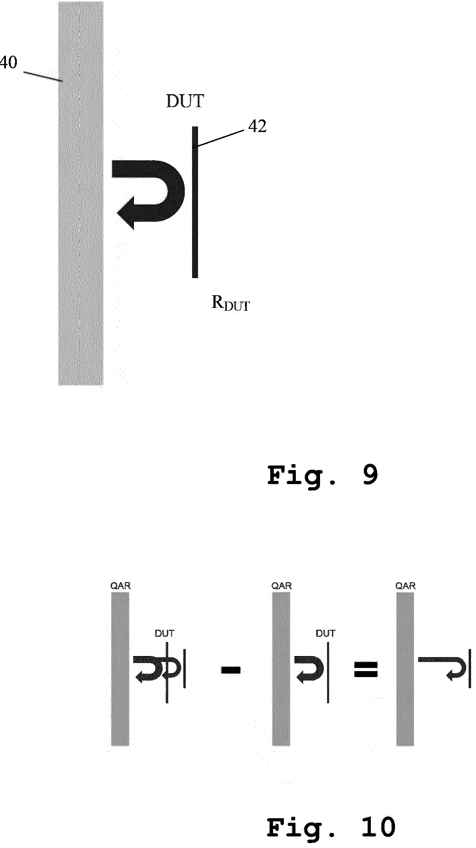

Now, a third, fourth, and fifth exemplary embodiment of the inventive measurement system is explained with respect to Fig. 7, Fig. 8, and Fig. 9. In this context, it is noted that said embodiments can alternatively be seen as three different measurement steps performed by the same system, wherein especially the measurement step according to Fig. 9 can be seen as an optional step.

Each of said exemplary embodiments comprises an imaging system 40, wherein said imaging system 40 preferably comprises transmit antennas and receive antennas. The third embodiment comprises, according to the invention, a reference object, exemplarily a metal plate 41, the metal plate being a reflector. In this context, especially a reference measurement is performed, which results in measuring data exemplarily comprising a respective reflectivity distribution, preferably a three-dimensional reflectivity distribution, denoted by $R_M$.

In accordance with Fig. 8, a measurement with a device under test 42 and reference object, exemplarily the metal plate 41, is performed. The corresponding measuring data exemplarily comprises a respective reflectivity distribution, preferably a three-dimensional reflectivity distribution, denoted by $R_{M,DUT}$. In this context, especially a double-transmission through the DUT 42 is measured. Furthermore, the respective reflection with respect to the reference object or the metal plate 41, respectively, is analyzed with respect to magnitude and phase.

According to Fig. 9, a measurement with the device under test 42 is performed. The corresponding measuring data exemplarily comprises a respective reflectivity distribution, preferably a three-dimensional reflectivity distribution, denoted by $R_{DUT}$.

It is noted that the influence of the reflection of the device under test 42 especially in the region of the metal plate 41 or the reference object, respectively, can be eliminated according to the following subtraction in accordance with Fig. 10 illustrating said step of subtracting:

$$\underline{R}_{M,DUT} = R_{M,DUT} - R_{DUT} \quad .$$

It is further noted that the respective distance gate with respect to the reference object or the metal plate 41, respectively, may especially be determined preferably with the aid of a processing unit such as the processing unit 33.

Furthermore, the respective reflection factor (especially complex-valued) $\Gamma_M$, $\Gamma_{M,DUT}$, $\underline{\Gamma}_{M,DUT}$ may be extracted in the distance gate of the reference object for $R_M$, $R_{M,DUT}$, $\underline{R}_{M,DUT}$. In addition to this, the respective transmission mask (especially complex-valued) $T = \Gamma_{M,DUT}/\Gamma_M$ , $\underline{T} = \underline{\Gamma}_{M,DUT}/\Gamma_M$ may be determined.

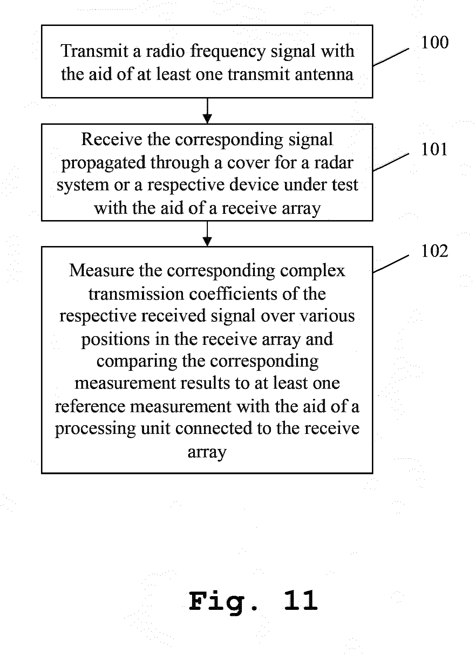

Fig. 11 shows a flow chart of an embodiment of the measurement method for measuring an angular error introduced by a cover for a radar system. In a first step 100, a radio frequency signal is transmitted with the aid of at least one transmit antenna. Then, in a second step 101, the corresponding signal propagated through the cover or a respective device under test is received with the aid of a receive array. Furthermore, in a third step 102, the corresponding complex transmission coefficients of the respective received signal are measured over various positions in the receive array and comparing the corresponding measurement results to at least one reference measurement with the aid of a processing unit connected to the receive array.

In this context, it might be particularly advantageous if the receive array is phase coherent with the at least one transmit antenna. In addition to this or as an alternative, all elements of the receive array are synchronized. It is noted that the corresponding complex transmission coefficients may preferably comprise or represent the respective disturbed aperture function. It is further noted that a corresponding Fourier transform of the disturbed aperture function may preferably comprise or represent the respective far-field beam pattern of the receive array.

It is particularly advantageous if the measurement method further comprises the inventive steps of employing a reflector, receiving the corresponding signal propagated through the cover or the respective device under test twice with the aid of the reflector located on the respective opposing site and the receive array, and scaling the corresponding phase and/or amplitude changes by a scaling factor with the aid of the processing unit. In this context, it is noted that the scaling factor may especially be between 0.4 and 0.6, preferably between 0.44 and 0.56, more preferably between 0.48 and 0.52, most preferably 0.5.

Furthermore, the method may especially comprise the step of comparing the far-field beam pattern of the receive array in combination with the cover or the respective device under test to a corresponding beam pattern of the at least one reference measurement especially for an angular error preferably with the aid of the processing unit.

Moreover, it is noted that a corresponding phase of the complex transmission coefficients may especially introduce a linear and/or a quadratic phase error on the receive array. In this context, the linear phase error may especially comprise or represent a corresponding squint of the respective beam. In addition to this or as an alternative, the quadratic phase error may especially comprise or represent a corresponding broadening of the respective beam. It might be particularly advantageous if the method further comprises the step of calculating and/or performing a respective beam forming in a digital and/or an analog manner preferably with the aid of the processing unit.

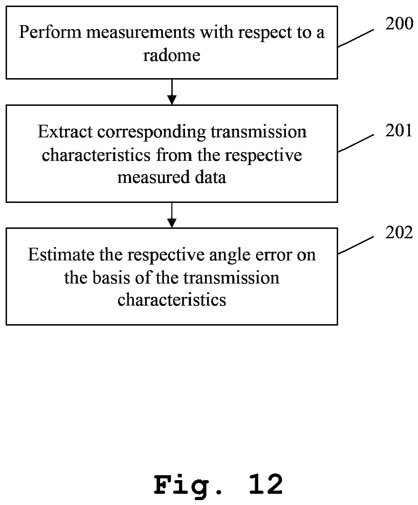

Finally, Fig. 12 shows a flow chart of a second exemplary embodiment of the method. As it can be seen from Fig. 12, in a first step 200, measurements with respect to a radome or any kind of radar cover, respectively, are performed. Then, in a second step 201, corresponding transmission characteristics are extracted from the respective measured data. Furthermore, in a third step 202, the respective angle error is estimated on the basis of the transmission characteristics.

In this context, it is noted that the respective distribution, especially the respective two-dimensional distribution, of the corresponding transmission factors, especially of the corresponding complex-valued transmission factors, with respect to the radome or the radar cover, respectively, may be measured preferably with the aid of a imaging system, especially a radar imaging system. In addition to this, said measurement can be performed with respect to transmission and/or to reflection.

With respect to the imaging system, especially the radar imaging system, it is noted that the imaging system, especially the radar imaging system, is configured to provide a spatial resolution being sufficient for differentiation of inhomogeneities, especially material inhomogeneities.

Furthermore, especially in the case of a reflection measurement, it is noted that the imaging system, especially the radar imaging system, is configured to return a reflectivity distribution, especially a three-dimensional reflectivity distribution. In addition to this, the imaging system, especially the radar imaging system, may especially comprise a three-dimensional resolution and/or a three-dimensional focusing.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims

**Claims**

1. A measurement system for measuring an angular error introduced by a cover (14) for a radar system or a respective device under test (32, 42), the measurement system comprising:

   at least one transmit antenna (30),
   a receive array (31), and
   a processing unit (33) connected to the receive array (31),
   wherein the at least one transmit antenna (30) is configured to transmit a radio frequency signal,
   wherein the receive array (31) is configured to receive the corresponding signal propagated through the cover (14) or the respective device under test (32, 42), and

wherein the processing unit (33) is configured to measure the corresponding complex transmission coefficients of the respective received signal over various positions in the receive array (31) and to compare the corresponding measurement results to at least one reference measurement,

**characterized in that**

the measurement system further comprises a reflector (41), the receive array (31) is further configured to receive the corresponding signal propagated through the cover (14) or the respective device under test (32, 42) twice with the aid of the reflector (41) located on the respective opposing site, and

the processing unit (33) is further configured to scale the corresponding phase and/or amplitude changes by a scaling factor.

2. The measurement system according to claim 1,

wherein the receive array (31) is phase coherent with the at least one transmit antenna (30), and/or
wherein all elements of the receive array (31) are synchronized.

3. The measurement system according to claim 1 or 2, wherein the corresponding complex transmission coefficients comprise or represent the respective disturbed aperture function.

4. The measurement system according to claim 3,
wherein a corresponding Fourier transform of the disturbed aperture function comprises or represents the respective far-field beam pattern of the receive array.

5. The measurement system according to claim 1,
wherein the scaling factor is between 0.4 and 0.6, preferably between 0.44 and 0.56, more preferably between 0.48 and 0.52, most preferably 0.5.

6. The measurement system according to claim 4,
wherein the processing unit (33) is further configured to compare the far-field beam pattern of the receive array (31) in combination with the cover (14) or the respective device under test (32, 42) to a corresponding beam pattern of the at least one reference measurement especially for an angular error.

7. The measurement system according to any of the claims 1 to 6,
wherein a corresponding phase of the complex transmission coefficients introduces a linear and/or a quadratic phase error on the receive array (31).

8. The measurement system according to claim 7,
wherein the linear phase error comprises or represents a corresponding squint of the respective beam, and/or
wherein the quadratic phase error comprises or represents a corresponding broadening of the respective beam.

9. The measurement system according to any of the claims 1 to 8,
wherein the processing unit (33) is further configured to calculate and/or perform a respective beam forming in a digital and/or an analog manner.

10. A measurement method for measuring an angular error introduced by a cover (14) for a radar system or a respective device under test (32, 42), the measurement method comprising the steps of:

transmitting a radio frequency signal with the aid of at least one transmit antenna (30),
receiving the corresponding signal propagated through the cover (14) or the respective device under test (32, 42) with the aid of a receive array (31),
measuring the corresponding complex transmission coefficients of the respective received signal over various positions in the receive array (31) and comparing the corresponding measurement results to at least one reference measurement with the aid of a processing unit (33) connected to the receive array (31),

**characterized by**

employing a reflector (41),
receiving the corresponding signal propagated through the cover (14) or the respective device under test (32, 42) twice with the aid of the reflector (41) located on the respective opposing site and the receive array (31), and scaling the corresponding phase and/or amplitude changes by a certain factor with the aid of the processing unit (33).

11. The measurement method according to claim 10,

   wherein the receive array (31) is phase coherent with the at least one transmit antenna, and/or
   wherein all elements of the receive array (31) are synchronized.

12. The measurement method according to claim 10 or 11, wherein the corresponding complex transmission coefficients comprise or represent the respective disturbed aperture function.

13. The measurement method according to claim 12,
   wherein a corresponding Fourier transform of the disturbed aperture function comprises or represents the respective far-field beam pattern of the receive array (31).


**Patentansprüche**

1. Messsystem zum Messen eines Winkelfehlers, der durch eine Abdeckung (14) für ein Radarsystem oder einen jeweiligen Prüfling (32, 42) eingeführt wird, das Messsystem umfassend:

   mindestens eine Sendeantenne (30),
   ein Empfangs-Array (31) und
   eine Verarbeitungseinheit (33), die mit dem Empfangs-Array (31) verbunden ist,
   wobei die mindestens eine Sendeantenne (30) konfiguriert ist, um ein Hochfrequenzsignal zu senden,
   wobei das Empfangs-Array (31) konfiguriert ist, um das entsprechende Signal, das durch die Abdeckung (14) oder den jeweiligen Prüfling (32, 42) ausgebreitet wird, zu empfangen, und
   wobei die Verarbeitungseinheit (33) konfiguriert ist, um die entsprechenden komplexen Transmissionsfaktoren des jeweiligen Empfangssignals über verschiedene Positionen in dem Empfangs-Array (31) zu messen und die entsprechenden Messergebnisse mit mindestens einer Referenzmessung zu vergleichen, **dadurch gekennzeichnet, dass**
   das Messsystem ferner einen Reflektor (41) umfasst, wobei das Empfangs-Array (31) ferner konfiguriert ist, um das entsprechende Signal, das durch die Abdeckung (14) oder den jeweiligen Prüfling (32, 42) ausgebreitet wird, mithilfe des Reflektors (41), der sich auf der jeweiligen gegenüberliegenden Stelle befindet, zweimal zu empfangen, und
   die Verarbeitungseinheit (33) ferner konfiguriert ist, um die entsprechenden Phasen- und/oder Amplitudenwechsel um einen Skalierungsfaktor zu skalieren.

2. Messsystem nach Anspruch 1,

   wobei das Empfangs-Array (31) mit der mindestens einen Sendeantenne (30) phasenkohärent ist, und/oder
   wobei alle Elemente des Empfangs-Arrays (31) synchronisiert sind.

3. Messsystem nach Anspruch 1 oder 2,
   wobei die entsprechenden komplexen Transmissionsfaktoren die jeweilige gestörte Aperturfunktion umfassen oder darstellen.

4. Messsystem nach Anspruch 3,
   wobei eine entsprechende Fourier-Transformation der gestörten Aperturfunktion das jeweilige Fernfeldstrahlmuster des Empfangs-Arrays umfasst oder darstellt.

5. Messsystem nach Anspruch 1,
   wobei der Skalierungsfaktor zwischen 0,4 und 0,6, vorzugsweise zwischen 0,44 und 0,56, mehr bevorzugt zwischen 0,48 und 0,52, am meisten bevorzugt 0,5, ist.

6. Messsystem nach Anspruch 4,
   wobei die Verarbeitungseinheit (33) ferner konfiguriert ist, um das Fernfeldstrahlmuster des Empfangs-Arrays (31) in Kombination mit der Abdeckung (14) oder dem jeweiligen Prüfling (32, 42) mit einem entsprechenden Strahlmuster der mindestens einen Referenzmessung, insbesondere hinsichtlich eines Winkelfehlers, zu vergleichen.

7. Messsystem nach einem der Ansprüche 1 bis 6,
wobei eine entsprechende Phase der komplexen Transmissionsfaktoren einen linearen und/oder einen quadratischen Phasenfehler auf dem Empfangs-Array (31) einführt.

8. Messsystem nach Anspruch 7,
wobei der lineare Phasenfehler ein entsprechendes Schielen des jeweiligen Strahls umfasst oder darstellt, und/oder wobei der quadratische Phasenfehler eine entsprechende Verbreiterung des jeweiligen Strahls umfasst oder darstellt.

9. Messsystem nach einem der Ansprüche 1 bis 8,
wobei die Verarbeitungseinheit (33) ferner konfiguriert ist, um auf digitale oder analoge Weise eine jeweilige Strahlformung zu berechnen und/oder durchzuführen.

10. Messverfahren zum Messen eines Winkelfehlers, der durch eine Abdeckung (14) für ein Radarsystem oder einen jeweiligen Prüfling (32, 42) eingeführt wird, das Messverfahren umfassend:

Messen eines Hochfrequenzsignals mithilfe mindestens einer Sendeantenne (30),
Empfangen des entsprechenden Signals, das durch die Abdeckung (14) oder den jeweiligen Prüfling (32, 42) ausgebreitet wird, mithilfe eines Empfangs-Arrays (31),
Messen der entsprechenden komplexen Transmissionsfaktoren des jeweiligen Empfangssignals über verschiedene Positionen in dem Empfangs-Array (31) und Vergleichen der entsprechenden Messergebnisse mit mindestens einer Referenzmessung mithilfe einer Verarbeitungseinheit (33), die mit dem Empfangs-Array (31) verbunden ist,
**gekennzeichnet durch**
Verwenden eines Reflektors (41),
Zweimal Empfangen des entsprechenden Signals, das durch die Abdeckung (14) oder den jeweiligen Prüfling (32, 42) ausgebreitet wird, mithilfe des Reflektors (41), der sich auf der jeweiligen gegenüberliegenden Stelle befindet, und des Empfangs-Arrays (31), und
Skalieren der entsprechenden Phasen- und/oder Amplitudenwechsel, um einen gewissen Faktor mithilfe der Verarbeitungseinheit (33).

11. Messverfahren nach Anspruch 10,

wobei das Empfangs-Array (31) mit der mindestens einen Sendeantenne phasenkohärent ist, und/oder
wobei alle Elemente des Empfangs-Arrays (31) synchronisiert sind.

12. Messverfahren nach Anspruch 10 oder 11, wobei die entsprechenden komplexen Transmissionsfaktoren die jeweilige gestörte Aperturfunktion umfassen oder darstellen.

13. Messverfahren nach Anspruch 12,
wobei eine entsprechende Fourier-Transformation der gestörten Aperturfunktion das jeweilige Fernfeldstrahlmuster des Empfangs-Arrays (31) umfasst oder darstellt.


**Revendications**

1. Système de mesure destiné à mesurer une erreur angulaire introduite par un couvercle (14) pour un système radar ou un dispositif testé respectif (32, 42), le système de mesure comprenant :

au moins une antenne d'émission (30),
un réseau de réception (31), et
une unité de traitement (33) connectée au réseau de réception (31),
dans lequel l'au moins une antenne d'émission (30) est configurée pour transmettre un signal radiofréquence,
dans lequel le réseau de réception (31) est configuré pour recevoir le signal correspondant propagé à travers le couvercle (14) ou le dispositif testé respectif (32, 42), et

dans lequel l'unité de traitement (33) est configurée pour mesurer les coefficients de transmission complexes correspondants du signal reçu respectif sur diverses positions dans le réseau de réception (31) et pour comparer les résultats de mesure correspondants à au moins une mesure de référence, **caractérisé en ce que**
le système de mesure comprend en outre un réflecteur (41), le réseau de réception (31) est en outre configuré pour recevoir deux fois le signal correspondant propagé à travers le couvercle (14) ou le dispositif testé respectif (32, 42) à l'aide du réflecteur (41) situé sur le site opposé respectif, et
l'unité de traitement (33) est en outre configurée pour mettre à l'échelle les changements de phase et/ou d'amplitude correspondants par un facteur d'échelle.

2. Système de mesure selon la revendication 1,

   dans lequel le réseau de réception (31) est en cohérence de phase avec l'au moins une antenne d'émission (30), et/ou
   dans lequel tous les éléments du réseau de réception (31) sont synchronisés.

3. Système de mesure selon la revendication 1 ou 2,
   dans lequel les coefficients de transmission complexes correspondants comprennent ou représentent la fonction d'ouverture perturbée respective.

4. Système de mesure selon la revendication 3,
   dans lequel une transformée de Fourier correspondante de la fonction d'ouverture perturbée comprend ou représente le diagramme de faisceau de champ lointain respectif du réseau de réception.

5. Système de mesure selon la revendication 1,
   dans lequel le facteur d'échelle est compris entre 0,4 et 0,6, de préférence entre 0,44 et 0,56, plus préférablement entre 0,48 et 0,52, le plus préférablement 0,5.

6. Système de mesure selon la revendication 4,
   dans lequel l'unité de traitement (33) est en outre configurée pour comparer le diagramme de faisceau de champ lointain du réseau de réception (31) en combinaison avec le couvercle (14) ou le dispositif testé respectif (32, 42) à un diagramme de faisceau correspondant de l'au moins une mesure de référence notamment pour une erreur angulaire.

7. Système de mesure selon l'une quelconque des revendications 1 à 6,
   dans lequel une phase correspondante des coefficients de transmission complexes introduit une erreur de phase linéaire et/ou quadratique sur le réseau de réception (31).

8. Système de mesure selon la revendication 7,
   dans lequel l'erreur de phase linéaire comprend ou représente un angle de strabisme correspondant du faisceau respectif, et/ou dans lequel l'erreur de phase quadratique comprend ou représente un élargissement correspondant du faisceau respectif.

9. Système de mesure selon l'une quelconque des revendications 1 à 8,
   dans lequel l'unité de traitement (33) est en outre configurée pour calculer et/ou effectuer une formation de faisceau respectif de manière numérique et/ou analogique.

10. Procédé de mesure pour mesurer une erreur angulaire introduite par un couvercle (14) pour un système radar ou un dispositif testé respectif (32, 42), le procédé de mesure comprenant les étapes consistant à :

    émettre un signal radiofréquence à l'aide d'au moins une antenne d'émission (30),
    recevoir le signal correspondant propagé à travers le couvercle (14) ou le dispositif testé respectif (32, 42) à l'aide d'un réseau de réception (31),
    mesurer les coefficients de transmission complexes correspondants du signal reçu respectif sur différentes positions dans le réseau de réception (31) et comparer les résultats de mesure correspondants à au moins une mesure de référence à l'aide d'une unité de traitement (33) connectée au réseau de réception (31),
    **caractérisé par**
    l'utilisation d'un réflecteur (41),
    la réception d'un signal correspondant propagé deux fois à travers le couvercle (14) ou le dispositif testé respectif (32, 42) à l'aide du réflecteur (41) situé sur le site opposé respectif et du réseau de réception (31), et la mise à l'échelle des changements de phase et/ou d'amplitude correspondants par un certain facteur à l'aide de l'unité de traitement (33).

11. Procédé de mesure selon la revendication 10,

dans lequel le réseau de réception (31) est en cohérence de phase avec l'au moins une antenne d'émission, et/ou dans lequel tous les éléments du réseau de réception (31) sont synchronisés.

12. Procédé de mesure selon la revendication 10 ou 11, dans lequel les coefficients de transmission complexes correspondants comprennent ou représentent la fonction d'ouverture perturbée respective.

13. Procédé de mesure selon la revendication 12, dans lequel une transformée de Fourier correspondante de la fonction d'ouverture perturbée comprend ou représente le diagramme de faisceau de champ lointain respectif du réseau de réception (31).

**Fig. 1A**

$$\Delta\varphi_1 = \Delta\varphi_2 = \Delta\varphi_3 = \Delta\varphi_4$$

→ correct angle estimation

**Fig. 1B**

Radar mit Phased Array
und Radom

**Fig. 2A**

$$\Delta\varphi_1 \neq \Delta\varphi_2 \neq \Delta\varphi_3 \neq \Delta\varphi_4$$

→ incorrect angle estimation

**Fig. 2B**

$$E_r(x_A, y_A) = T(x_A, y_A) \cdot e^{-jkd\cos(\alpha)}$$

# Fig. 3

$$E_r(x_A, y_A) = \int E_i(x, y) \cdot T(x, y) \cdot \frac{e^{-jk|\vec{r}_A - \vec{r}|}}{|\vec{r}_A - \vec{r}|} dx dy$$

# Fig. 4

Fig. 5

Fig. 6

40

41

$R_M$

**Fig. 7**

40

42

41

$R_{M,DUT}$

**Fig. 8**

40

DUT

42

$R_{DUT}$

## Fig. 9

QAR

DUT

−

QAR

DUT

=

QAR

## Fig. 10

Transmit a radio frequency signal with the aid of at least one transmit antenna — 100

Receive the corresponding signal propagated through a cover for a radar system or a respective device under test with the aid of a receive array — 101

Measure the corresponding complex transmission coefficients of the respective received signal over various positions in the receive array and comparing the corresponding measurement results to at least one reference measurement with the aid of a processing unit connected to the receive array — 102

# Fig. 11

Perform measurements with respect to a radome    — 200

Extract corresponding transmission characteristics from the respective measured data    — 201

Estimate the respective angle error on the basis of the transmission characteristics    — 202

Fig. 12

**EP 3 869 616 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0028622 A
- US 2018306903 A1
- EP 3258288 A1